# EUROPÄISCHE PATENTSCHRIFT

(11) **EP 3 531 096 B1**
(45) Veröffentlichungstag und Bekanntmachung des Hinweises auf die Patenterteilung: **12.05.2021**
(21) Anmeldenummer: 19156423.6
(22) Anmeldetag: 11.02.2019
(51) Int. Cl.: G01L 19/08

(54) **VORRICHTUNG ZUR MESSUNG EINES GASDRUCKS**
DEVICE FOR MEASURING A GAS PRESSURE
DISPOSITIF DE MESURE D'UNE PRESSION GAZEUSE

(30) Priorität: 26.02.2018 DE 102018104265
(43) Veröffentlichungstag der Anmeldung: 28.08.2019
(73) Patentinhaber: VACUUBRAND GMBH + CO KG, 97877 Wertheim (DE)
(72) Erfinder: Swatosch, Thorsten, 97877 Wertheim (DE); Fehn, Christian, 97922 Unterbalbach (DE); Dirscherl, Jürgen, 97892 Kreuzwertheim (DE); Gitmans, Frank, 97877 Wertheim (DE)
(74) Vertreter: Von Rohr Patentanwälte Partnerschaft mbB

(56) Entgegenhaltungen:
- DE-A1-102013 105 226
- DE-B3-102013 216 524
- DE-U1-202008 000 837

## Beschreibung

Die vorliegende Erfindung betrifft eine Vorrichtung zur Messung und Regelung eines Gasdrucks gemäß dem Oberbegriff von Anspruch 1.

Gasdruckmessvorrichtungen sind in verschiedenen Ausführungsformen bekannt. Sie werden häufig auch als Vakuummessgeräte oder Vakuummeter bezeichnet. Sie dienen zur Messung des physikalischen Drucks eines Gases oder Gasgemisches in einer abgeschlossenen Apparatur. In den meisten Anwendungen wird der absolute Gasdruck - also bezogen auf ein Vakuum - gemessen.

Gasdruckmessvorrichtungen der in Rede stehenden Art weisen eine Gasdruckmesseinrichtung und eine Bedieneinrichtung auf. Die Gasdruckmesseinrichtung hat einen Drucksensor, der einen physikalischen Gasdruck in eine zu diesem Gasdruck in eindeutiger Beziehung stehende, z.B. proportionale, elektrische Ausgangsgröße umwandelt. Bekannt sind z. B. Drucksensoren mit einer Membran aus Aluminiumoxid-Keramik. Zur Gasdruckmessung wird die Gasdruckmesseinrichtung mit der Apparatur verbunden, z. B. mittels einer gasdichten Leitung.

Die gasdichte Leitung zur Apparatur ist meist unflexibel und darf nicht zu lang sein, um eine gewünschte Messgenauigkeit zu erreichen. Vorteilhaft ist demnach eine Positionierung der Gasdruckmesseinrichtung nahe der Apparatur. Daher sind aus der Praxis Gasdruckmessvorrichtungen bekannt, bei denen die Gasdruckmesseinrichtung von der Bedieneinrichtung dauerhaft separat ausgebildet und gegenüber der Bedieneinrichtung beweglich ist. Die Gasdruckmessvorrichtung hat dabei eine Verbindungseinrichtung zur Verbindung der Gasdruckmesseinrichtung mit der Bedieneinrichtung, so dass Daten von der Gasdruckmesseinrichtung über die Verbindungseinrichtung zur Bedieneinrichtung übertragbar sind.

Demgegenüber ist häufig eine kompakte Anordnung von Gasdruckmesseinrichtung und Bedieneinrichtung gewünscht. Daher sind aus der Praxis Gasdruckmessvorrichtungen bekannt, bei denen die Gasdruckmesseinrichtung und die Bedieneinrichtung dauerhaft in einem gemeinsamen Gehäuse angeordnet und zueinander unbeweglich sind. Auch hier hat die Gasdruckmessvorrichtung eine Verbindungseinrichtung zur Verbindung der Gasdruckmesseinrichtung mit der Bedieneinrichtung, so dass Daten von der Gasdruckmesseinrichtung über die Verbindungseinrichtung zur Bedieneinrichtung übertragbar sind. Allerdings ist die Verbindungseinrichtung ebenfalls in dem Gehäuse angeordnet.

Beide Arten der bekannten Gasdruckmessvorrichtungen können jeweils nur eine der beiden Anforderungen (Positionierung der Gasdruckmesseinrichtung möglichst nahe der Apparatur bzw. möglichst kompakte Anordnung von Gasdruckmesseinrichtung und Bedieneinrichtung) erfüllen.

Aus dem Dokument DE 20 2008 000 837 U1 ist ein digitaler Kühlmitteldruckmesser bekannt, der beim Füllen eines Kühlmittels in eine Klimaanlage den Kühlmitteldruck messen und das Messergebnis auf einem Display anzeigen kann. Beim Füllen des Kühlmittels in die Klimaanlage wird die Füllmenge durch den Kühlmitteldruckmesser gesteuert. Dieser Kühlmitteldruckmesser hat eine Bedieneinrichtung mit einem Gehäuse, einem Display und zwei Steuerschaltern. Das Display ist über einen Hochdruck-/Niederdrucksensor mit den Steuerschaltern verbunden. Die Bedieneinrichtung kann über ein Kabel mit einem Thermoelement-Vakuumsensor verbunden werden, durch den der Vakuumzustand im Kühlmittelrohr gemessen werden kann. Wenn das Kühlmittel Fremdstoffe enthält, muss die Klimaanlage zunächst mit einer Vakuumpumpe evakuiert und dann erneut mit einem Kühlmittel gefüllt werden. Außerdem kann die Bedieneinrichtung über ein anderes Kabel mit einem Hochdruck-/Niederdrucktemperatursensor verbunden werden, um die Hochdruck- und Niederdrucktemperatur zu messen. Der Hochdruck-/Niederdrucksensor kann ausschließlich den durch das flüssige Kühlmittel im Kühlmittelrohr verursachten Druck messen. Der Hochdruck-/Niederdrucktemperatursensor kann ausschließlich die Temperatur des flüssigen Kühlmittels messen. Nur der Thermoelement-Vakuumsensor kann einen Gasdruck, und zwar den im Kühlmittelrohr herrschenden Gasdruck, messen.

Aufgabe der vorliegenden Erfindung ist es, die aus der Praxis bekannten Vorrichtungen zur Messung eines Gasdrucks hinsichtlich Nutzungsmöglichkeiten, Handhabung und/oder Anpassbarkeit zu verbessern.

Die obige Aufgabe wird durch eine Vorrichtung zur Messung eines Gasdrucks gemäß Anspruch 1 gelöst. Vorteilhafte Weiterbildungen sind Gegenstand der Unteransprüche.

Die Grundidee der vorliegenden Erfindung besteht darin, eine Gasdruckmesseinrichtung bereitzustellen, die zur Durchführung einer Gasdruckmessung sowohl unmittelbar an der Bedieneinrichtung angeordnet als auch von der Bedieneinrichtung separiert sein kann.

Dazu weist die erfindungsgemäße Vorrichtung eine Verbindungseinrichtung zur Verbindung der Gasdruckmesseinrichtung mit der Bedieneinrichtung auf, so dass Daten von der Gasdruckmesseinrichtung indirekt, also über die Verbindungseinrichtung, zur Bedieneinrichtung übertragbar sind. Die Verbindungseinrichtung befindet sich zumindest teilweise, vorzugsweise vollständig, außerhalb der Gasdruckmesseinrichtung und zumindest teilweise, vorzugsweise vollständig, außerhalb der Bedieneinrichtung.

Erfindungsgemäß ist vorgesehen, dass die Gasdruckmesseinrichtung und die Bedieneinrichtung jeweils eine Schnittstelle aufweisen, die, insbesondere zur Durchführung einer Gasdruckmessung, mechanisch unmittelbar miteinander verbindbar sind, so dass Daten von der Schnittstelle der Gasdruckmesseinrichtung direkt, also ohne Verwendung der Verbindungseinrichtung bzw. unter Umgehung der Verbindungseinrichtung, zur Schnittstelle der Bedieneinrichtung übertragbar sind. Dies ermöglicht eine kompakte Anordnung von Gasdruckmesseinrichtung und Bedieneinrichtung bei Durchführung einer Gasdruckmessung.

Außerdem ist erfindungsgemäß vorgesehen, dass, insbesondere zur Durchführung einer Gasdruckmessung, die Gasdruckmesseinrichtung von der Bedieneinrichtung derart separierbar ist, dass Daten von der Gasdruckmesseinrichtung über die Verbindungseinrichtung zur Bedieneinrichtung übertragbar sind. Die Gasdruckmesseinrichtung ist in diesem Fall also gegenüber der Bedieneinrichtung beweglich. Dies ermöglicht eine Positionierung der Gasdruckmesseinrichtung nahe einer Apparatur, für die eine Gasdruckmessung durchgeführt werden soll, bzw. eine geringe Länge einer die Apparatur und die Gasdruckmesseinrichtung verbindenden gasdichten Leitung, was vorteilhaft im Hinblick auf die Messgenauigkeit ist.

Die erfindungsgemäße Vorrichtung ermöglicht also zwei unterschiedliche Messaufbauten. Zum einen kann die Gasdruckmesseinrichtung mechanisch unmittelbar mit der Bedieneinrichtung verbunden sein. Zum anderen kann die Gasdruckmesseinrichtung von der Bedieneinrichtung separiert und ihr gegenüber beweglich sein. Zwischen diesen beiden Messaufbauten kann gewechselt werden. Damit erfüllt die erfindungsgemäße Vorrichtung die Anforderungen für beide Einsatzzwecke, also Positionierung der Gasdruckmesseinrichtung möglichst nahe der Apparatur bzw. möglichst kompakte Anordnung von Gasdruckmesseinrichtung und Bedieneinrichtung. Sie ist flexibel einsetzbar, je nach Einsatzzweck anpassbar und einfach handhabbar.

Statt wie bisher zwei unterschiedliche, dedizierte Gasdruckmessvorrichtungen vorzuhalten, hat der Nutzer mit der erfindungsgemäßen Vorrichtung ein einziges Gerät, bei dem er entscheiden kann, an welcher Stelle die Gasdruckmesseinrichtung - in Abhängigkeit der durchzuführenden Messung - angeordnet werden soll. Dies reduziert Kosten und Platzbedarf.

In beiden Möglichkeiten der Anordnung der Gasdruckmesseinrichtungen kann die Gasdruckmesseinrichtung Daten, die die Messung des Gasdrucks betreffen, an die Bedieneinrichtung übertragen. Im mechanisch verbundenen Zustand erfolgt die Übertragung über die jeweiligen Schnittstellen der Gasdruckmesseinrichtung und der Bedieneinrichtung. Im separierten Zustand ist eine Datenübertragung über die Verbindungseinrichtung vorgesehen.

Außerdem ist erfindungsgemäß vorgesehen, dass an der Bedieneinrichtung eine Andockstelle vorgesehen ist, an der die Gasdruckmesseinrichtung anbringbar ist. Die Andockstelle ist Kann an der Bedieneinrichtung als mechanische Ausformung zur korrekten Ausrichtung der Gasdruckmesseinrichtung, als mechanische Rasthalterung, Steckhalterung und/oder Magnethalterung ausgebildet.

Zusätzlich zur Verbindung der Schnittstellen der Gasdruckmesseinrichtung und der Bedieneinrichtung kann die Andockstelle zur sicheren Fixierung und zur stabilen lösbaren Verbindung der Gasdruckmesseinrichtung mit der Bedieneinrichtung beitragen.

Im Bereich der Andockstelle kann die Schnittstelle der Bedieneinrichtung angeordnet sein, so dass die Schnittstellen im unmittelbar mechanisch verbundenen Zustand im Bereich der Andockstelle angeordnet sind.

Zudem kann vorteilhafterweise durch die Andockstelle dem Nutzer visualisiert werden, in welcher Position die Gasdruckmesseinrichtung an der Bedieneinrichtung anzubringen ist. Die Andockstelle kann korrespondierend zu der/dem an der Bedieneinrichtung anzuordnenden Fläche und/oder Bereich der Gasdruckmesseinrichtung ausgebildet sein.

Bei einer bevorzugten Ausführungsform der Erfindung sind die Schnittstellen so ausgebildet, dass bei mechanisch unmittelbar verbundenen Schnittstellen die Gasdruckmesseinrichtung an der Bedieneinrichtung lösbar befestigt ist. Die Schnittstellen übernehmen also nicht nur die Funktion einer Datenverbindung sondern auch einer mechanischen Befestigung bzw. Halterung. Im mechanisch verbundenen Zustand ist die Gasdruckmesseinrichtung sicher an der Bedieneinrichtung fixiert. Die mechanische Befestigung kann form- und/oder kraftschlüssig erfolgen. Wichtig ist, dass die mechanische Befestigung lösbar ist, da die Gasdruckmesseinrichtung von der Bedieneinrichtung separierbar sein muss, was ein mechanisches Trennen der Schnittstelle der Gasdruckmesseinrichtung von der Schnittstelle der Bedieneinrichtung bedingt.

Vorteilhafterweise sind die beiden Schnittstellen als komplementäre Steckverbinder ausgebildet. Die Steckverbinder können mittels Formschluss miteinander verbindbar sein, vorzugsweise wobei die Schnittstelle der Bedieneinrichtung als Buchse und die Schnittstelle der Gasdruckmesseinrichtung als Einbaustecker ausgebildet sind. Eine komplementäre Ausbildung der Schnittstellen als Steckverbinder ist insbesondere im Hinblick auf die Handhabung, Stabilität und Kosten vorteilhaft.

Die Ausbildung der Schnittstellen als Steckverbinder ermöglicht die elektrische Kontaktierung der Gasdruckmesseinrichtung zu der Bedieneinrichtung. Im elektrisch kontaktierten Zustand ist ein Datenaustausch zwischen der Gasdruckmesseinrichtung und der Bedieneinrichtung gewährleistet.

Gemäß einer vorteilhaften Ausgestaltung des Erfindungsgedankens ist vorgesehen, dass die Verbindungseinrichtung ein kabelgebundenes Verbindungsmittel aufweist. Das kabelgebundene Verbindungsmittel kann an beide Schnittstellen lösbar befestigt sein, so dass Daten von der Schnittstelle der Gasdruckmesseinrichtung über die Verbindungseinrichtung, insbesondere über das kabelgebundene Verbindungsmittel, zur Schnittstelle der Bedieneinrichtung übertragbar sind, wenn die Gasdruckmesseinrichtung von der Bedieneinrichtung separiert ist. Das kabelgebundene Verbindungsmittel verbindet die Gasdruckmesseinrichtung mit der Bedieneinrichtung elektrisch kontaktierend. Durch das kabelgebundene Verbindungsmittel kann die Gasdruckmesseinrichtung möglichst nahe der Apparatur angeordnet werden, so dass insbesondere die an die Gasdruckmesseinrichtung anzuordnende gasdichte Leitung, die die Apparatur mit der Gasdruckmesseinrichtung verbindet, eine möglichst geringe Länge aufweist. Da über das kabelgebundene Verbindungsmittel lediglich Daten ausgetauscht werden, beeinflusst die Länge des kabelgebundenen Verbindungsmittels nicht die Messgenauigkeit der Gasdruckmessung.

Vorzugsweise weist das kabelgebundene Verbindungsmittel zwei jeweils zu einer Schnittstelle komplementäre Steckverbinder, insbesondere einen Stecker und eine Kupplung, auf. Hierfür kann das an die Schnittstelle der Gasdruckmesseinrichtung anzuordnende Ende des Verbindungsmittels eine Kupplung und das an die Schnittstelle der Bedieneinrichtung anzuordnende Endstück des Verbindungsmittels einen Stecker aufweisen, wobei der Stecker des Verbindungsmittels mit der Buchse der Bedieneinrichtung und die Kupplung des Verbindungsmittels mit dem Einbaustecker der Gasdruckmesseinrichtung formschlüssig verbunden werden kann, so dass eine elektrische Kontaktierung und ein Datenaustausch sichergestellt ist. Durch die Steckverbinder des kabelgebundenen Verbindungsmittels kann eine stabile jedoch lösbare Verbindung der Gasdruckmesseinrichtung zu der Bedieneinrichtung gewährleistet werden. Sie erlauben eine einfache Handhabung und eine kostengünstige Konstruktion.

Darüber hinaus ist bei einer bevorzugten Ausführungsvariante der Erfindung vorgesehen, dass die Verbindungseinrichtung einen Adapter aufweist, mittels dem das kabelgebundene Verbindungsmittel mit der Schnittstelle der Gasdruckmesseinrichtung verbindbar ist. Der Adapter kann eine Verdrehsicherung aufweisen. Die Verdrehsicherung verhindert ein relatives Verdrehen des Verbindungsmittels zu der Schnittstelle der Gasdruckmesseinrichtung. Der Adapter wird vorzugsweise an dem Einbaustecker der Gasdruckmesseinrichtung angeordnet. Ferner kann die Verdrehsicherung die formschlüssige Verbindung des Verbindungsmittels zu der Schnittstelle der Gasdruckmesseinrichtung unterstützen. Die Verdrehsicherung kann durch das Einrasten eines Vorsprunges in eine dazu korrespondierende Vertiefung erzielt werden. Beispielsweise kann der Adapter einen Vorsprung und/oder eine Ausnehmung aufweisen, die korrespondierend zu einer Ausnehmung und/oder einem Vorsprung der Schnittstelle der Gasdruckmesseinrichtung ausgebildet ist, wobei sich im verbundenen Zustand des Adapters zu der als Einbaustecker ausgebildeten Schnittstelle der Gasdruckmesseinrichtung eine verdrehsichere, formschlüssige Verbindung ergibt. Ein Verdrehen wird durch den Anschlag des Vorsprunges an der Ausnehmung vermieden.

Eine Übertragung von Daten von der Gasdruckmesseinrichtung zu der Bedieneinrichtung kann über die mechanisch unmittelbare Verbindung der Schnittstellen, über das kabelgebundene Verbindungsmittel und/oder drahtlos erfolgen. Bei einer bevorzugten Ausführungsform der Erfindung umfasst die Verbindungseinrichtung einen der Gasdruckmesseinrichtung zugeordneten Transceiver und einen der Bedieneinrichtung zugeordneten Transceiver. Über die Transceiver können drahtlos Daten von der Gasdruckmesseinrichtung zur Bedieneinrichtung übertragen werden. Hierbei kann die Gasdruckmesseinrichtung mit der Bedieneinrichtung unmittelbar mechanisch verbunden oder die Gasdruckmesseinrichtung von der Bedieneinrichtung separiert sein. Bei einer separierten Anordnung der Gasdruckmesseinrichtung von der Bedieneinrichtung sind diese Einrichtungen über die Verbindungseinrichtung miteinander verbunden. Die Verbindungseinrichtung kann demgemäß zum Datenaustausch die jeweiligen Transceiver und/oder das kabelgebundene Verbindungsmittel aufweisen.

Des Weiteren kann die Bedieneinrichtung vorteilhafterweise eine Stützeinrichtung aufweisen, die auch dann ausklappbar ist, wenn die Gasdruckmesseinrichtung an der Bedieneinrichtung befestigt ist. Die Stützeinrichtung ist zur Stützung der Bedieneinrichtung ausgebildet und kann die Form eines sogenannten Klappfußes aufweisen. Ein Ausklappen der Stützeinrichtung kann in Abhängigkeit des jeweiligen Einsatzzweckes vorgenommen werden. Die Stützeinrichtung kann unabhängig von der Anordnung der Gasdruckmesseinrichtung genutzt werden, das heißt die Stützeinrichtung kann zur Stützung der Bedieneinrichtung im mechanisch unmittelbar verbundenen Zustand der Bedieneinrichtung mit der Gasdruckmesseinrichtung und im separierten Zustand der Gasdruckmesseinrichtung von der Bedieneinrichtung zur Stützung der Bedieneinrichtung verwendet werden.

Im Übrigen ist gemäß einer bevorzugten Ausführungsform des Erfindungsgedankens vorgesehen, dass die Bedieneinrichtung mindestens ein berührungsempfindliches Anzeigemittel aufweist. Das berührungsempfindliche Anzeigemittel kann als Touchdisplay ausgebildet sein.

Die erfindungsgemäße Vorrichtung kann zum Regeln eines Gasdrucks ausgebildet sein, insbesondere zur Ausgabe von Steuersignalen an ein Stellglied eines Regelkreises. Solch ein Stellglied kann z. B. ein Motor einer Vakuumpumpe oder ein Ventil zwischen einer Vakuumpumpe und der Apparatur sein.

Dabei ist es vorteilhaft, wenn ein Nutzer der erfindungsgemäßen Vorrichtung über die Bedieneinrichtung durch Eingabe von Informationen den Gasdruck in der Apparatur regeln und/oder steuern kann und/oder Informationen zu dem Gasdruck der Apparatur mittels des Anzeigemittels angezeigt bekommt. Eine Bedienung über ein berührungsempfindliches Anzeigemittel ist besonders nutzerfreundlich, da die Nutzer an die Verwendung von berührungsempfindlichen Anzeigemitteln gewöhnt sind und die Möglichkeit einer Vielzahl von Einstellungen bei einer kleinen Bedienfläche des Anzeigemittels dem Nutzer zur Verfügung gestellt werden kann. Eine Bedienung kann beispielsweise durch sogenannte Wischgesten und/oder ein Antippen von bestimmten Symbolen erfolgen.

Im Bereich der Andockstelle kann an der der Gasdruckmesseinrichtung zugewandten Seite der Bedieneinrichtung und/oder an der der Bedieneinrichtung zugewandten Seite der Gasdruckmesseinrichtung wenigstens ein Abdichtungsmittel, vorzugsweise eine Elastomer-Dichtscheibe, angeordnet sein. Das Abdichtungsmittel kann zudem derart ausgebildet sein, dass es die Andockstelle im unmittelbar mechanisch verbundenen Zustand der Schnittstellen abdichtet, so dass die Schnittstellen geschützt sind.

Im Übrigen kann der Gasdrucksensor der Gasdruckmesseinrichtung den Druck direkt oder indirekt messen. Bei einer indirekten Gasdruckmessung kann beispielsweise eine Kraft pro Flächeneinheit gemessen werden, die als Rückschluss auf den vorhandenen Druck genutzt werden kann. Zur Messung des Gasdrucks, der vorzugsweise im Bereich des Vakuums vorgesehen ist, kann auf die DIN 28400 verwiesen werden.

Weitere Merkmale, Vorteile und Anwendungsbereiche der vorliegenden Erfindung ergeben sich aus der nachfolgenden Beschreibung von Ausführungsbeispielen anhand der Zeichnungen und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung oder deren Rückbeziehung.

In der Zeichnung zeigt
- Fig. 1: schematisch in einer perspektivischen Ansicht eine bevorzugte Ausführungsform einer erfindungsgemäßen Vorrichtung zur Messung eines Gasdrucks in einem ersten Zustand;
- Fig. 2: schematisch in einer perspektivischen Ansicht die Vorrichtung aus Fig. 1 in einem zweiten Zustand;
- Fig. 3: schematisch in einer perspektivischen Ansicht die Vorrichtung aus Fig. 2 in einem dritten Zustand;
- Fig. 4: schematisch eine Rückansicht der Vorrichtung aus Fig. 3;
- Fig. 5A: schematisch in einer perspektivischen Ansicht eine Gasdruckmesseinrichtung der Vorrichtung aus Fig. 1;
- Fig. 5B: schematisch einen vergrößerten Ausschnitt der Gasdruckmesseinrichtung aus Fig. 5A;
- Fig. 6: schematisch in einer perspektivischen Ansicht die Vorrichtung aus Fig. 3 in einem vierten Zustand;
- Fig. 7: schematisch eine Seitenansicht der Vorrichtung aus Fig. 6; und
- Fig. 8: schematisch eine Frontansicht der Vorrichtung aus Fig. 1.

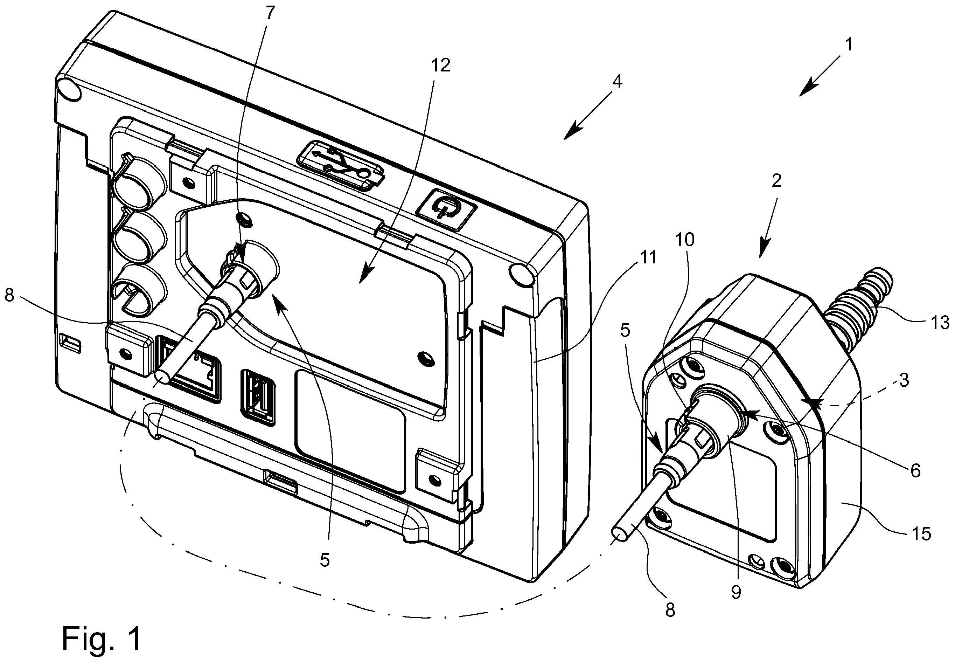

Fig. 1 zeigt schematisch in einer perspektivischen Ansicht eine bevorzugte Ausführungsform einer erfindungsgemäßen Vorrichtung 1 zur Messung eines Gasdrucks in einem ersten Zustand. Die Vorrichtung 1 weist eine Gasdruckmesseinrichtung 2 mit einem Gasdrucksensor 3 auf. Ferner weist die Vorrichtung 1 eine Bedieneinrichtung 4 und eine Verbindungseinrichtung 5 zur Verbindung der Gasdruckmesseinrichtung 2 mit der Bedieneinrichtung 4 auf, so dass Daten von der Gasdruckmesseinrichtung 2 über die Verbindungseinrichtung 5 zur Bedieneinrichtung 4 übertragbar sind.

Die Gasdruckmesseinrichtung 2 weist eine Schnittstelle 6 und die Bedieneinrichtung 4 eine Schnittstelle 7 auf. Die Schnittstellen 6, 7 sind zur Durchführung einer Gasdruckmessung mechanisch unmittelbar verbindbar, so dass Daten von der Schnittstelle 6 der Gasdruckmesseinrichtung 2 direkt zur Schnittstelle 7 der Bedieneinrichtung 4 übertragbar sind.

Zusätzlich ist die Gasdruckmesseinrichtung 2 zur Durchführung einer Gasdruckmessung von der Bedieneinrichtung 4 derart separierbar, dass Daten von der Gasdruckmesseinrichtung 2 über die Verbindungseinrichtung 5 zur Bedieneinrichtung 4 übertragbar sind.

In dem in Fig. 1 dargestellten ersten Zustand ist die Gasdruckmesseinrichtung 2 von der Bedieneinrichtung 4 separiert. Die Verbindungseinrichtung 5 weist hier ein kabelgebundenes Verbindungsmittel 8 auf, das an beide Schnittstellen 6, 7 lösbar befestigt ist, so dass in diesem ersten Zustand Daten von der Schnittstelle 6 der Gasdruckmesseinrichtung 2 über das kabelgebundene Verbindungsmittel 8 zur Schnittstelle 7 der Bedieneinrichtung 4 übertragbar sind. Das kabelgebundene Verbindungsmittel 8 befindet sich hier vollständig außerhalb der Gasdruckmesseinrichtung 2 und vollständig außerhalb der Bedieneinrichtung 4.

In diesem ersten Zustand kann die Gasdruckmesseinrichtung 2 nahe einer Apparatur, für die eine Gasdruckmessung durchgeführt werden soll, positioniert werden.

Bei dem in Fig. 1 dargestellten Ausführungsbeispiel weist die Verbindungseinrichtung 5 einen Adapter 9 auf, mittels dem das kabelgebundene Verbindungsmittel 8 mit der Schnittstelle 6 der Gasdruckmesseinrichtung 2 verbindbar ist. Der Adapter 9 wird vor dem Verbinden des kabelgebundenen Verbindungsmittels an der Schnittstelle 6 der Gasdruckmesseinrichtung 2 angeordnet, insbesondere lösbar befestigt.

Der Adapter 9 weist eine Verdrehsicherung 10 auf. Die Verdrehsicherung 10 ist in dem dargestellten Ausführungsbeispiel durch einen Vorsprung und eine Ausnehmung gebildet. Hierfür weist die Schnittstelle 6 der Gasdruckmesseinrichtung 2 eine Ausnehmung auf, in die ein Vorsprung des Adapters 9 einfassen kann, so dass das Verdrehen durch einen Anschlag des Vorsprungs an die Wandungen der Ausnehmung begrenzt ist bzw. vermieden wird.

Ferner weist die Bedieneinrichtung 4 bei dem hier dargestellten und bevorzugten Ausführungsbeispiel eine Stützeinrichtung 11 auf. Die Stützeinrichtung 11 dient zur Abstützung der Vorrichtung 1 und ist in dem dargestellten Ausführungsbeispiel als sogenannter Klappfuß ausgebildet.

Im Übrigen zeigt Fig. 1, dass bei dem hier dargestellten und bevorzugten Ausführungsbeispiel an der Bedieneinrichtung 4 eine Andockstelle 12 vorgesehen ist. An die Andockstelle 12 kann die Gasdruckmesseinrichtung 2 angebracht werden. Die Fig. 1 zeigt, dass die Andockstelle 12 an der Bedieneinrichtung 4 als mechanische Ausformung zur korrekten Ausrichtung der Gasdruckmesseinrichtung 2 ausgebildet ist.

Bei dem in Fig. 1 dargestellten Ausführungsbeispiel ist außerdem gezeigt, dass die Gasdruckmesseinrichtung 2 einen Anschluss 13 aufweist, an dem eine gasdichte Leitung anschließbar ist zur Verbindung mit einer Apparatur, in der ein Gasdruck gemessen werden soll.

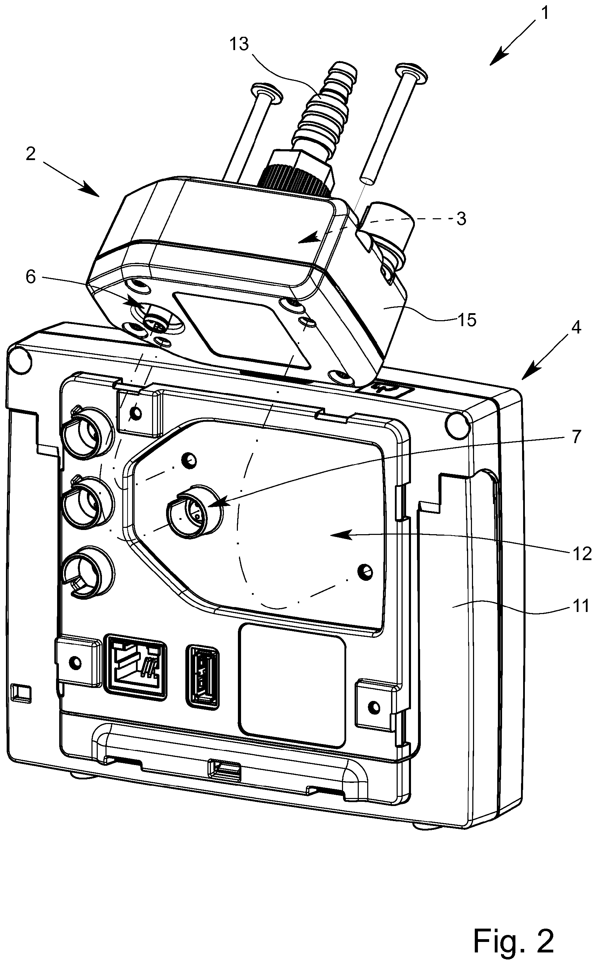

Fig. 2 zeigt schematisch die Vorrichtung 1 aus Fig. 1 in einem zweiten Zustand. Hier ist die Verbindungseinrichtung 5 samt dem Adapter 9 von den Schnittstellen 6, 7 gelöst. Die Schnittstelle 6 kann nun mit der Schnittstelle 7 mechanisch unmittelbar miteinander verbunden werden.

In Fig. 2 ist zu erkennen, dass bei diesem Ausführungsbeispiel beide Schnittstellen 6, 7 als komplementäre Steckverbinder ausgebildet sind, wobei sie mittels Formschluss mechanisch unmittelbar miteinander verbindbar sind. Insbesondere ist die Schnittstelle 6 der Gasdruckmesseinrichtung 2 als Einbaustecker und die Schnittstelle 7 der Bedieneinrichtung 4 als Buchse ausgebildet. Nicht dargestellt ist, dass das kabelgebundene Verbindungsmittel 8 zwei jeweils zu einer der Schnittstellen 6, 7 komplementäre Steckverbinder, insbesondere einen Stecker und eine Kupplung, aufweist.

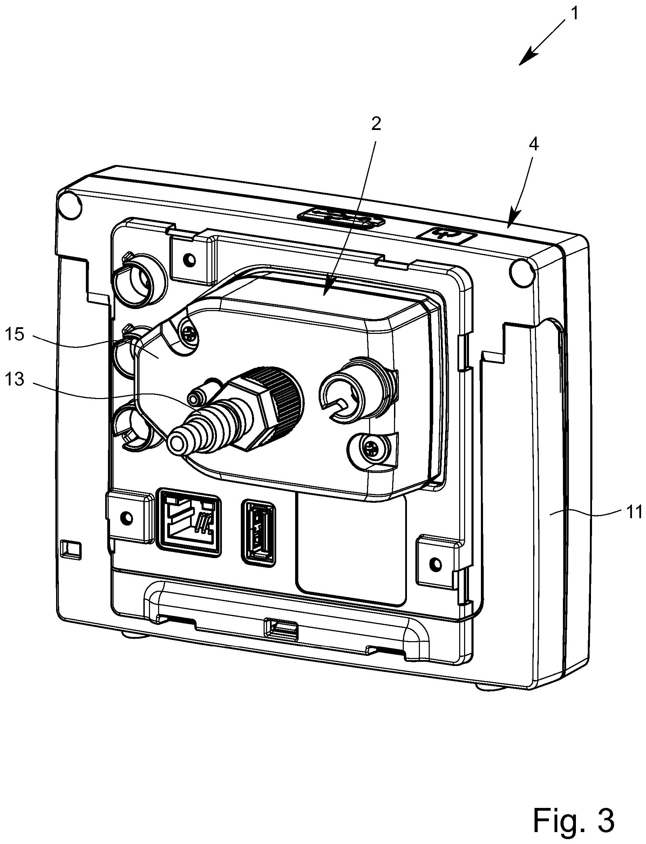

Fig. 3 zeigt schematisch die Vorrichtung 1 aus Fig. 1 in einem dritten Zustand. Hier sind die Schnittstellen 6, 7 mechanisch unmittelbar miteinander verbunden. Die Gasdruckmesseinrichtung 2 ist an der Bedieneinrichtung 4 lösbar befestigt. Dies ermöglicht eine kompakte Anordnung von Gasdruckmesseinrichtung 2 und Bedieneinrichtung 4 bei Durchführung einer Gasdruckmessung.

Erfindungsgemäß ist vorgesehen, dass, insbesondere zur Durchführung einer Gasdruckmessung, die Gasdruckmesseinrichtung 2 von der Bedieneinrichtung 4 wieder separierbar ist, wobei Daten von der Gasdruckmesseinrichtung 2 über die Verbindungseinrichtung 5 zur Bedieneinrichtung 4 übertragbar sind. Dazu kann das kabelgebundene Verbindungsmittel 8 an die Schnittstellen 6, 7 angeschlossen werden.

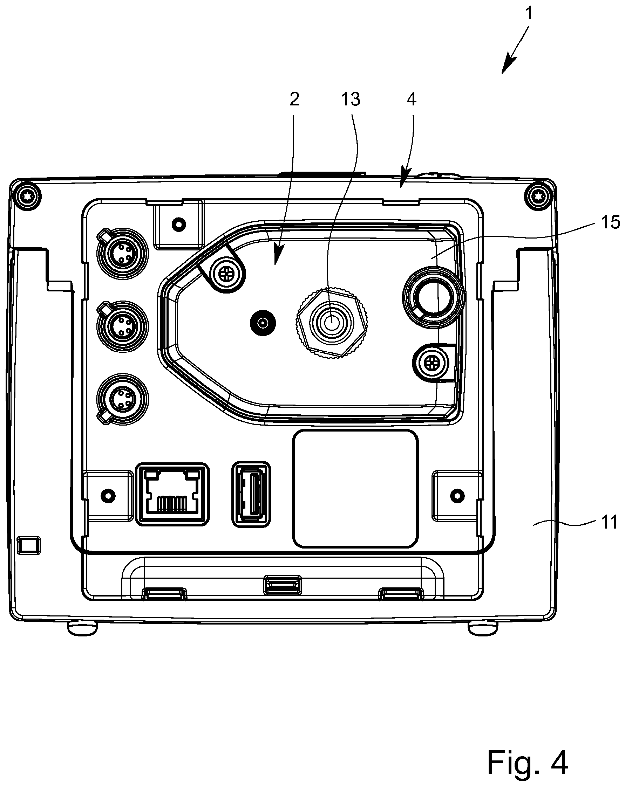

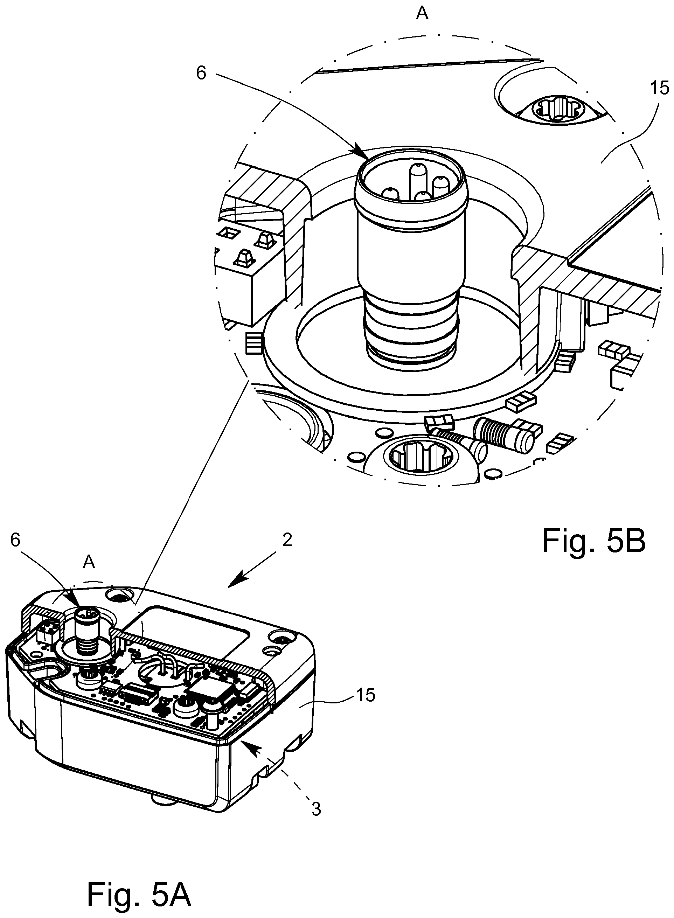

Fig. 4 zeigt schematisch eine Rückansicht der Vorrichtung 1 aus Fig. 3. Fig. 5A zeigt schematisch in einer perspektivischen Ansicht die Gasdruckmesseinrichtung 2 der Vorrichtung 1 aus Fig. 1. Fig. 5B zeigt schematisch einen vergrößerten Ausschnitt der Gasdruckmesseinrichtung 2 aus Fig. 5A. Hier ist u. a. die Ausbildung der Schnittstelle 6 der Gasdruckmesseinrichtung 2 als Einbaustecker zu erkennen.

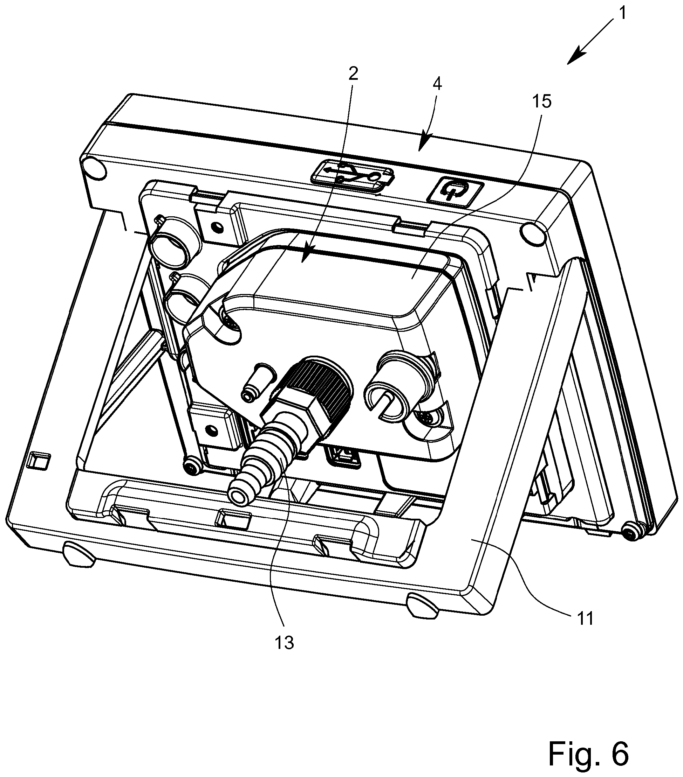

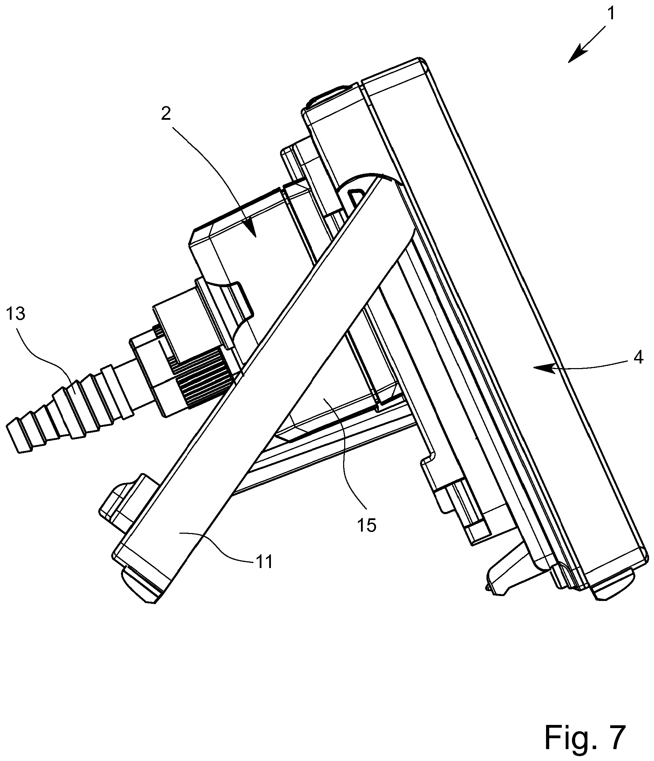

Fig. 6 schematisch in einer perspektivischen Ansicht die Vorrichtung 1 aus Fig. 3 in einem vierten Zustand. Fig. 7 zeigt schematisch eine Seitenansicht der Vorrichtung 1 aus Fig. 6. In dem in Fig. 6 und 7 gezeigten vierten Zustand ist die Stützeinrichtung 11 zur Stützung der Bedieneinrichtung ausgeklappt. Dabei ist die Gasdruckmesseinrichtung 2 an der Bedieneinrichtung 4 befestigt.

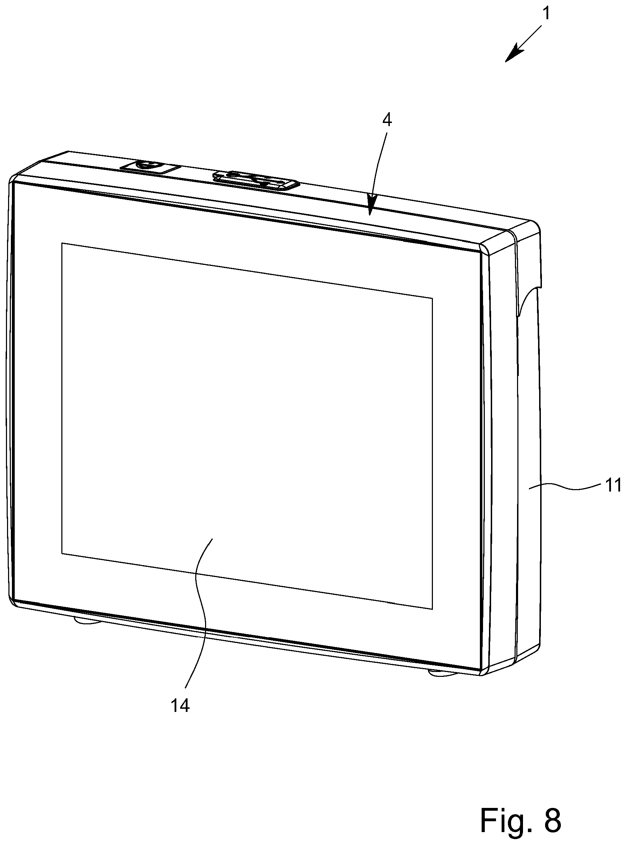

Fig. 8 zeigt schematisch eine Frontansicht der Vorrichtung aus Fig. 1. Hier ist zu sehen, dass die Bedieneinrichtung 4 bei dem hier dargestellten und bevorzugten Ausführungsbeispiel ein berührungsempfindliches Anzeigemittel 14 aufweist. Das berührungsempfindliche Anzeigemittel 14 ist als Touchdisplay ausgebildet.

### Bezugszeichenliste:

- 1: Vorrichtung
- 2: Gasdruckmesseinrichtung
- 3: Gasdrucksensor
- 4: Bedieneinrichtung
- 5: Verbindungseinrichtung
- 6: Schnittstelle von 2
- 7: Schnittstelle von 4
- 8: Verbindungsmittel
- 9: Adapter
- 10: Verdrehsicherung
- 11: Stützeinrichtung
- 12: Andockstelle
- 13: Anschluss von 2
- 14: Anzeigemittel von 4
- 15: Gehäuse von 2

## Patentansprüche

1. Vorrichtung (1) zur Messung und Regelung eines Gasdrucks in einer geschlossenen Apparatur, wobei die Vorrichtung (1) Folgendes umfasst:
- eine Gasdruckmesseinrichtung (2) mit einem Gasdrucksensor (3),
- eine Bedieneinrichtung (4) und
eine Verbindungseinrichtung (5) zur Verbindung der Gasdruckmesseinrichtung (2) mit der Bedieneinrichtung (4), so dass Daten von der Gasdruckmesseinrichtung (2) über die Verbindungseinrichtung (5) zur Bedieneinrichtung (4) übertragbar sind, wobei die Gasdruckmesseinrichtung (2) und die Bedieneinrichtung (4) jeweils eine Schnittstelle (6, 7) aufweisen, die, insbesondere zur Durchführung einer Gasdruckmessung, mechanisch unmittelbar miteinander verbindbar sind, so dass Daten von der Schnittstelle (6) der Gasdruckmesseinrichtung (2) direkt zur Schnittstelle (7) der Bedieneinrichtung (4) übertragbar sind und
wobei, insbesondere zur Durchführung einer Gasdruckmessung, die Gasdruckmesseinrichtung (2) von der Bedieneinrichtung (4) derart separierbar ist, dass Daten von der Gasdruckmesseinrichtung (2) über die Verbindungseinrichtung (5) zur Bedieneinrichtung (4) übertragbar sind wobei an der Bedieneinrichtung (4) eine Andockstelle (12) vorgesehen ist, an der die Gasdruckmesseinrichtung (2) anbringbar ist und
dass die Andockstelle (12) an der Bedieneinrichtung (4) als mechanische Ausformung zur korrekten Ausrichtung der Gasdruckmesseinrichtung (2), als mechanische Rasthalterung, Steckhalterung und/oder Magnethalterung ausgebildet ist.

2. Vorrichtung nach Anspruch 1, **dadurch gekennzeichnet, dass** die Vorrichtung (1) zur Ausgabe von Steuersignalen an ein Stellglied eines Regelkreises ausgebildet ist.

3. Vorrichtung nach Anspruch 1 oder 2, **dadurch gekennzeichnet, dass** durch Eingabe von Informationen in die Bedieneinrichtung (4) der Gasdruck in der Apparatur regelbar ist.

4. Vorrichtung nach einem der vorhergehenden Ansprüche, **dadurch gekennzeichnet, dass** die Gasdruckmesseinrichtung (2) gegenüber der Bedieneinrichtung (4) beweglich ist, wenn die Gasdruckmesseinrichtung (2) von der Bedieneinrichtung (4) separiert ist.

5. Vorrichtung nach einem der vorhergehenden Ansprüche, **dadurch gekennzeichnet, dass** die Schnittstellen (6, 7) so ausgebildet sind, dass bei mechanisch unmittelbar miteinander verbundenen Schnittstellen (6, 7) die Gasdruckmesseinrichtung (2) an der Bedieneinrichtung (4) lösbar befestigt ist und/oder
dass beide Schnittstellen (6, 7) als komplementäre Steckverbinder ausgebildet sind, die mittels Formschluss miteinander verbindbar sind, vorzugsweise wobei die Schnittstelle (7) der Bedieneinrichtung (4) als Buchse und die Schnittstelle (6) der Gasdruckmesseinrichtung (2) als Einbaustecker ausgebildet sind.

6. Vorrichtung nach einem der vorhergehenden Ansprüche, **dadurch gekennzeichnet, dass** die Verbindungseinrichtung (5) ein kabelgebundenes Verbindungsmittel (8) aufweist, das an beide Schnittstellen (6, 7) lösbar befestigbar ist, so dass Daten von der Schnittstelle (6) der Gasdruckmesseinrichtung (2) über die Verbindungseinrichtung (5) zur Schnittstelle (7) der Bedieneinrichtung (4) übertragbar sind, wenn die Gasdruckmesseinrichtung (2) von der Bedieneinrichtung (4) separiert ist.

7. Vorrichtung nach Anspruch 6, **dadurch gekennzeichnet, dass** das kabelgebundene Verbindungsmittel (8) zwei zu jeweils einer Schnittstelle (6, 7) komplementäre Steckverbinder, insbesondere einen Stecker und eine Kupplung, aufweist.

8. Vorrichtung nach Anspruch 6 oder 7, **dadurch gekennzeichnet, dass** die Verbindungseinrichtung (5) einen Adapter (9) aufweist, mittels dem das kabelgebundene Verbindungsmittel (8) mit der Schnittstelle (6) der Gasdruckmesseinrichtung (2) verbindbar ist, vorzugsweise wobei der Adapter (9) eine Verdrehsicherung (10) aufweist.

9. Vorrichtung nach einem der vorhergehenden Ansprüche, **dadurch gekennzeichnet, dass** die Verbindungseinrichtung (5) einen der Gasdruckmesseinrichtung (2) zugeordneten Transceiver und einen der Bedieneinrichtung (4) zugeordneten Transceiver umfasst, mittels denen drahtlos Daten von der Gasdruckmesseinrichtung (2) zur Bedieneinrichtung (4) übertragbar sind.

10. Vorrichtung nach einem der vorhergehenden Ansprüche, **dadurch gekennzeichnet, dass** die Bedieneinrichtung (4) eine Stützeinrichtung (11) aufweist, die ausklappbar ist, wenn die Gasdruckmesseinrichtung (2) an der Bedieneinrichtung (4) befestigt ist.

11. Vorrichtung nach einem der vorhergehenden Ansprüche, **dadurch gekennzeichnet, dass** die Bedieneinrichtung (4) ein berührungsempfindliches Anzeigemittel (14) aufweist.

12. Vorrichtung nach einem der vorhergehenden Ansprüche, **dadurch gekennzeichnet, dass** der Gasdrucksensor (3) in einem Gehäuse (15) der Gasdruckmesseinrichtung (2) angeordnet ist.

13. Vorrichtung nach Anspruch 12, **dadurch gekennzeichnet, dass** die Schnittstelle (6) der Gasdruckmesseinrichtung (2) an dem Gehäuse (15) der Gasdruckmesseinrichtung (2) angeordnet ist.

14. Vorrichtung nach einem der vorhergehenden Ansprüche, **dadurch gekennzeichnet, dass** die Gasdruckmesseinrichtung (2), vorzugsweise an einem Gehäuse (15) der Gasdruckmesseinrichtung (2), einen Anschluss (13) aufweist, an dem eine gasdichte Leitung anschließbar ist zur Verbindung mit der Apparatur.

## Claims

1. Apparatus (1) for measuring and controlling a gas pressure in a closed equipment, the apparatus (1) comprising:
- a gas pressure measuring device (2) with a gas pressure sensor (3),
- an operating device (4) and
a connection device (5) for connecting the gas pressure measuring device (2) to the operating device (4) so that data can be transmitted from the gas pressure measuring device (2) via the connection device (5) to the operating device (4), wherein the gas pressure measuring device (2) and the operating device (4) each have an interface (6, 7) which, in particular for carrying out a gas pressure measurement, can be directly mechanically connected to one another, so that data can be transmitted from the interface (6) of the gas pressure measuring device (2) directly to the interface (7) of the operating device (4), and
wherein, in particular for carrying out a gas pressure measurement, the gas pressure measuring device (2) can be separated from the operating device (4) in such a way that data can be transmitted from the gas pressure measuring device (2) to the operating device (4) via the connecting device (5),
wherein a docking area (12) is provided on the operating device (4), to which the gas pressure measuring device (2) can be attached, and
wherein the docking area (12) on the operating device (4) is designed as a mechanical formation for the correct alignment of the gas pressure measuring device (2), as a mechanical latching holder, plug-in holder and/or magnetic holder.

2. Apparatus according to claim 1, wherein the device (1) is designed to output control signals to an actuator of a control circuit.

3. Apparatus according to claim 1 or 2, wherein the gas pressure in the equipment can be regulated by inputting information into the operating device (4).

4. Apparatus according to one of the preceding claims, wherein the gas pressure measuring device (2) is movable relative to the operating device (4) when the gas pressure measuring device (2) is separated from the operating device (4).

5. Apparatus according to one of the preceding claims, wherein the interfaces (6, 7) are designed in such a way that, in the case of interfaces (6, 7) connected mechanically directly to one another, the gas pressure measuring device (2) is detachably fastened to the operating device (4) and/or
wherein the two interfaces (6, 7) are designed as complementary plug connectors which can be connected to one another by means of positive locking, preferably with the interface (7) of the operating device (4) being designed as a socket and the interface (6) of the gas pressure measuring device (2) being designed as a built-in plug.

6. Apparatus according to one of the preceding claims, wherein the connecting device (5) has a cable-connected connecting means (8) which can be detachably fastened to both interfaces (6, 7), so that data can be transmitted from the interface (6) of the gas pressure measuring device (2) via the connecting device (5) to the interface (7) of the operating device (4) when the gas pressure measuring device (2) is separated from the operating device (4).

7. Apparatus according to claim 6, wherein the cable-connected connection means (8) has two connectors, in particular a plug and a coupling, complementary to a respective interface (6, 7).

8. Apparatus according to claim 6 or 7, wherein the connecting device (5) has an adapter (9) by means of which the cable-connected connecting means (8) can be connected to the interface (6) of the gas pressure measuring device (2), preferably wherein the adapter (9) has an anti-rotation device (10).

9. Apparatus according to one of the preceding claims, wherein the connection device (5) comprises a transceiver associated with the gas pressure measuring device (2) and a transceiver associated with the operating device (4), by means of which data can be transmitted wirelessly from the gas pressure measuring device (2) to the operating device (4).

10. Apparatus according to one of the preceding claims, wherein the operating device (4) has a support device (11) which can be folded out when the gas pressure measuring device (2) is attached to the operating device (4).

11. Apparatus according to one of the preceding claims, wherein the operating device (4) has a touch-sensitive display means (14).

12. Apparatus according to one of the preceding claims, wherein the gas pressure sensor (3) is arranged in a housing (15) of the gas pressure measuring device (2).

13. Apparatus according to claim 12, wherein the interface (6) of the gas pressure measuring device (2) is arranged on the housing (15) of the gas pressure measuring device (2).

14. Apparatus according to one of the preceding claims, wherein the gas pressure measuring device (2), preferably on a housing (15) of the gas pressure measuring device (2), has a connection (13) to which a gas-tight line can be connected for connection to the apparatus.

## Revendications

1. Appareil (1) pour mesurer et contrôler une pression de gaz dans un appareillage fermé, l'appareil (1) comprenant :
- un dispositif de mesure de la pression du gaz (2) avec un capteur de pression du gaz (3),
- un dispositif de fonctionnement (4) et
un dispositif de raccordement (5) pour relier le dispositif de mesure de la pression du gaz (2) à le dispositif de fonctionnement (4), de sorte que des données puissent être transmises du dispositif de mesure de la pression du gaz (2) à le dispositif de fonctionnement (4) via le dispositif de raccordement (5),
dans lequel le dispositif de mesure de la pression du gaz (2) et le dispositif de fonctionnement (4) présentent chacun une interface (6, 7) qui, en particulier pour la réalisation d'une mesure de la pression du gaz, peut être directement reliée mécaniquement entre eux, de sorte que des données peuvent être transmises de l'interface (6) du dispositif de mesure de la pression du gaz (2) directement à l'interface (7) du dispositif de fonctionnement (4), et
dans lequel le dispositif de mesure de la pression du gaz (2) peut être séparé du dispositif de fonctionnement (4), en particulier pour la réalisation d'une mesure de la pression du gaz, de telle sorte que des données peuvent être transmises du dispositif de mesure de la pression du gaz (2) au dispositif de fonctionnement (4) par l'intermédiaire du dispositif de raccordement (5),
dans lequel une zone d'amarrage (12) est prévu sur le dispositif de fonctionnement (4), à laquelle le dispositif de mesure de la pression du gaz (2) peut être fixé, et dans lequel la zone d'amarrage (12) sur le dispositif de fonctionnement (4) est conçu comme une formation mécanique pour l'alignement correct du dispositif de mesure de la pression du gaz (2), comme un support à verrouillage mécanique, un support enfichable et/ou un support magnétique.

2. Appareil selon la revendication 1, dans lequel le dispositif (1) est conçu pour délivrer des signaux de commande à un actionneur d'une boucle de commande.

3. Appareil selon la revendication 1 ou 2, dans lequel la pression du gaz dans l'appareillage peut être régulée par l'entrée d'informations dans le dispositif de fonctionnement (4).

4. Appareil selon l'une des revendications précédentes, dans lequel le dispositif de mesure de la pression du gaz (2) est mobile par rapport au dispositif de fonctionnement (4) lorsque le dispositif de mesure de la pression du gaz (2) est séparé du dispositif de fonctionnement (4).

5. Appareil selon l'une des revendications précédentes, dans lequel les interfaces (6, 7) sont conçues de telle sorte que, dans le cas d'interfaces (6, 7) qui sont mécaniquement directement reliées entre elles, le dispositif de mesure de la pression du gaz (2) est fixé de manière amovible au dispositif de fonctionnement (4) et/ou
dans lequel les deux interfaces (6, 7) sont conçues comme des connecteurs complémentaires qui peuvent être reliés entre eux par complémentarité de forme, l'interface (7) du dispositif de fonctionnement (4) étant de préférence conçue comme une connecteur et l'interface (6) du dispositif de mesure de la pression de gaz (2) étant conçue comme une fiche intégrée.

6. Appareil selon des revendications précédentes, dans lequel le dispositif de raccordement (5) présente un moyen de connexion (8) relié par câble qui peut être fixé de manière amovible aux deux interfaces (6, 7), de sorte que des données peuvent être transmises de l'interface (6) du dispositif de mesure de la pression du gaz (2) à l'interface (7) du dispositif de fonctionnement (4) par l'intermédiaire du dispositif de raccordement (5) lorsque le dispositif de mesure de la pression du gaz (2) est séparé du dispositif de fonctionnement (4).

7. Appareil selon la revendication 6, dans lequel le moyen de connexion (8) relié par câble comprend deux connecteurs complémentaires à une interface respective (6, 7), en particulier une fiche et un couplage.

8. Appareil selon la revendication 6 ou 7, dans lequel le dispositif de raccordement (5) comprend un adaptateur (9) au moyen duquel le dispositif de raccordement (8) connecté par câble peut être raccordé à l'interface (6) du dispositif de mesure de la pression du gaz (2), l'adaptateur (9) comprenant de préférence un dispositif anti-rotation (10).

9. Appareil selon l'une des revendications précédentes, dans lequel le dispositif de raccordement (5) comprend un émetteur-récepteur associé au dispositif de mesure de la pression du gaz (2) et un émetteur-récepteur associé au dispositif de fonctionnement (4), au moyen desquels des données sans fil peuvent être transmises du dispositif de mesure de la pression du gaz (2) au dispositif de fonctionnement (4).

10. Appareil selon l'une des revendications précédentes, dans lequel le dispositif de fonctionnement (4) comprend un dispositif de support (11) qui peut être déplié lorsque le dispositif de mesure de la pression du gaz (2) est fixé au dispositif de fonctionnement (4).

11. Appareil selon l'une des revendications précédentes, dans lequel le dispositif de fonctionnement (4) comprend un moyen d'affichage tactile (14).

12. Appareil selon l'une des revendications précédentes, dans lequel le capteur de pression de gaz (3) est disposé dans un boîtier (15) du dispositif de mesure de la pression de gaz (2).

13. Appareil selon la revendication 12, dans lequel l'interface (6) du dispositif de mesure de la pression du gaz (2) est disposée sur le boîtier (15) du dispositif de mesure de la pression du gaz (2).

14. Appareil selon l'une des revendications précédentes, dans lequel le dispositif de mesure de la pression du gaz (2), de préférence sur un boîtier (15) du dispositif de mesure de la pression du gaz (2), comporte une connexion (13) auquel une conduite étanche au gaz peut être raccordée pour le raccordement à l'appareillage.
